(19) Europäisches Patentamt / European Patent Office / Office européen des brevets

(11) **EP 3 992 147 A1**

(12) **EUROPÄISCHE PATENTANMELDUNG**

(43) Veröffentlichungstag:
   **04.05.2022   Patentblatt 2022/18**

(21) Anmeldenummer: **20204259.4**

(22) Anmeldetag: **28.10.2020**

(51) Internationale Patentklassifikation (IPC):
   **C01B 33/193** [(2006.01)]   **C08K 3/36** [(2006.01)]
   **C08L 21/00** [(2006.01)]

(52) Gemeinsame Patentklassifikation (CPC):
   (C-Sets verfügbar)
   **C01B 33/193; C08K 3/36; C08L 9/06**   (Forts.)

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**
   Benannte Validierungsstaaten:
   **KH MA MD TN**

(71) Anmelder: **Evonik Operations GmbH**
   **45128 Essen (DE)**

(72) Erfinder: **Die Erfindernennung liegt noch nicht vor**

(74) Vertreter: **Evonik Patent Association**
   **c/o Evonik Industries AG**
   **IP Management**
   **Bau 1042A/PB 15**
   **Paul-Baumann-Straße 1**
   **45772 Marl (DE)**

(54) **GEFÄLLTE KIESELSÄUREN, VERFAHREN ZUR DEREN HERSTELLUNG UND DEREN VERWENDUNG**

(57) Gegenstand der Erfindung sind gefällte Kieselsäuren, mit den folgenden physikalisch-chemischen Parametern

| | |
|---|---|
| CTAB-Oberfläche | ≤ 115 m²/g, |
| DOA | ≥ 130 ml / (100 g), |
| RoTap > 300 µm | ≥ 86 %, |

$$V\,(d5 - d50) \,/\, V\,(d5 - d100) \quad < 0{,}66.$$

Die gefällten Kieselsäuren werden hergestellt in dem man
a) eine wässrige Lösung eines organischen und/oder anorganischen Salzes und/oder eines Alkali- oder Erdalkalisilikats und/oder einer organischen und/oder anorganischen Base mit einem pH ≥ 9 vorlegt,
b) in diese Vorlage unter Rühren bei 80 - 98 °C für 60 - 120 Minuten gleichzeitig Wasserglas und ein Säuerungsmittel zudosiert,
c) dann wird die Zugabe von Wasserglas gestoppt und nur Säure in geringerer Menge als zuvor zudosiert, um einen pH des Gemisches (bei 60 °C gemessen) von 9,0 - 10,0 zu erreichen,
d) dann wird das Gemisch für 45 min bis zu 200 min bei hoher Temperatur > 85 °C gerührt, jedoch ohne weitere Edukte zuzugeben,
e) mit Schwefelsäure auf einen pH von ca. 3,5 - 4,5 (bei 60 °C gemessen) angesäuert und
f) filtriert, getrocknet auf einen Trocknungsverlust < 8 % und im Anschluss granuliert.

Die erfindungsgemäßen Kieselsäuren können zur Herstellung von Kautschukmischungen eingesetzt werden, insbesondere zur Herstellung von Reifen, Kabelmänteln, Schläuchen, Treibriemen, Förderbändern, Walzenbelägen, Schuhsohlen, Dichtungselementen und Dämpfungselementen.

(52) Gemeinsame Patentklassifikation (CPC): (Forts.)

C-Sets
**C08L 9/06**

**Beschreibung**

Die vorliegende Erfindung betrifft gefällte Kieselsäuren, Verfahren zur deren Herstellung und deren Verwendung.

Aus WO2012059234 sind Elastomerzusammensetzungen bekannt, die mindestens ein Isoprenelastomer und eine Kieselsäure als verstärkenden anorganischen Füllstoff enthalten, wobei die Kieselsäure eine CTAB- Oberfläche zwischen 40 $m^2/g$ und 525 $m^2/g$, BET- Oberfläche zwischen 45 $m^2/g$ und 550 $m^2/g$, eine Breite Ld ((d84 - d16) / d50), gemessen durch Partikelgröße XDC nach Deagglomeration mit Ultraschall, von mindestens 0,91, und einer Verteilung des Porenvolumens mit einem Verhältnis V (d5 - d50) / V (d5 - d100) von mindestens 0,66 aufweist, und 3-Acryloxypropyltriethoxysilan als Haftvermittler verwendet wird.

Ferner ist aus EP2102104 ein Verfahren zur Herstellung von Kieselsäuren bekannt, wobei die Kieselsäure eine CTAB- Oberfläche von 40 $m^2/g$ bis 525 $m^2/g$, eine BET-Oberfläche von 45 $m^2/g$ bis 550 $m^2/g$, eine Breite Ld ((d84 - d16) / d50), gemessen durch XDC-Korngrößenanalyse nach Ultraschalldesaggregation, von mindestens 0,91 und eine Porenvolumenverteilung V (d5 - d50) / V (d5 - d100) von mindestens 0,66 aufweist.

Aus EP1831297 und WO2006072704 ist die Verwendung einer Kieselsäure mit einer BET-Oberfläche von mindestens 60 $m^2/g$ als anorganischer Füllstoff in einem thermoplastischen Polymermaterial zur Erhöhung der Steifheit des Materials unter Beibehaltung oder Verbesserung seiner Schlagzähigkeit bekannt.

Ferner sind aus US2005032965 und WO2008077948 Kieselsäuren mit einer CTAB - Oberfläche zwischen 40 $m^2/g$ und 525 $m^2/g$, eine BET-Oberfläche zwischen 45 $m^2/g$ und 550 $m^2/g$, eine Größenverteilungsbreite Ld ((d84-d16) / d50), gemessen durch XDC-Partikelgrößenanalyse nach Ultraschallzerfall, von mindestens 0,91 und eine Porenvolumenverteilung V (d5 - d50) / V (d5 - d100) von mindestens 0,66 bekannt.

Ein Nachteil der bekannten Kieselsäuren in dem angestrebten spezifischen Oberflächenbereich ist die schlechte Dispersion in Kautschukmischungen und somit schlechte Abriebeigenschaften der Kautschukmischungen, vor allem im Einsatz als Laufflächenmischungen.

Aufgabe der vorliegenden Erfindung ist es, eine Kieselsäure zur Verfügung zu stellen, welche im Vergleich zu den bekannten Kieselsäuren eine verbesserte Dispersion in den Kautschukmischungen aufweist. Gleichzeitig sollte die Kieselsäure möglichst als Granulat vorliegen, damit sie möglichst gut inkorporiert und in die Kautschukmatrix leicht eingearbeitet werden kann.

Gegenstand der Erfindung sind gefällte Kieselsäuren, gekennzeichnet durch die folgenden physikalisch-chemischen Parameter

| | |
|---|---|
| CTAB-Oberfläche | $\leq$ 115 $m^2/g$, vorzugsweise $\leq$ 105 $m^2/g$, besonders bevorzugt $\leq$ 90 $m^2/g$, ganz besonders bevorzugt 45 $m^2/g$ - 90 $m^2/g$, insbesondere bevorzugt 65 $m^2/g$ - 90 $m^2/g$ und insbesondere ganz bevorzugt 70 $m^2/g$ - 90 $m^2/g$, |
| DOA-Aufnahme | $\geq$ 130 ml / (100 g), vorzugsweise $\geq$ 140 ml / (100 g), besonders bevorzugt 145 ml / (100 g) - 190 ml / (100 g), |
| Ro-Tap > 300 $\mu$m | $\geq$ 86 %, vorzugsweise 86 % - 98 %, besonders bevorzugt 86 % - 95 % und insbesondere 90 % - 95 %, |
| V (d5 - d50) / V (d5 - d100) | < 0,66, vorzugsweise 0,30 - 0,65, und insbesondere 0,30 - 0,64. |

Die erfindungsgemäßen, gefällten Kieselsäuren können eine BET-Oberfläche von $\leq$ 125 $m^2/g$, vorzugsweise $\leq$ 115 $m^2/g$, besonders bevorzugt 70 $m^2/g$ - 105 $m^2/g$, aufweisen.

Die erfindungsgemäßen, gefällten Kieselsäuren können eine Sears-Zahl $_{original}$ (ml KOH bezogen auf 1,5 g Kieselsäure) von 7,0 - 20,0 ml / (1,5 g), vorzugsweise von 9,0 - 15,0 ml / (1,5 g) und besonders bevorzugt von 11,0 - 14,0 ml / (1,5 g), aufweisen.

Die erfindungsgemäßen, gefällten Kieselsäuren können eine Silanolgruppendichte von $\geq$ 5,4 OH / $nm^2$, vorzugsweise $\geq$ 5,5 OH /$nm^2$, aufweisen.

Die erfindungsgemäßen, gefällten Kieselsäuren können einen Trocknungsverlust von 2 % - 10 %, vorzugsweise 4 % - 8 %, aufweisen.

Die erfindungsgemäßen, gefällten Kieselsäuren können einen pH-Wert von 4,0 - 7,0, vorzugsweise 5,5 - 7,0, aufweisen.

Die erfindungsgemäßen, gefällten Kieselsäuren können eine elektrische Leitfähigkeit von $\leq$ 1200 $\mu$S/cm, vorzugsweise 200 $\mu$S/cm - 800 $\mu$S/cm, aufweisen.

Die erfindungsgemäßen, gefällten Kieselsäuren können einen Glührückstand von 3 % - 5 %, vorzugsweise 4 % - 5 %, aufweisen.

Die erfindungsgemäßen, gefällten Kieselsäuren können einen Ro-Tap < 75 $\mu$m Wert von $\leq$ 10 %, vorzugsweise

≤ 8 %, aufweisen.

Die erfindungsgemäßen, gefällten Kieselsäuren können eine Schüttdichte von mindestens 180 g/ L, vorzugsweise von 200 g / L - 350 g / L, besonders bevorzugt von 250 g/l - 330 g / L und ganz besonders bevorzugt von 250 g / L - 320 g / L aufweisen.

Die erfindungsgemäßen, gefällten Kieselsäuren können einen TAR-Wert (Fraktion der Granulatkörner: 3,14 mm - 5,00 mm) von 15 % - 60 %, vorzugsweise 20 % - 50 %, aufweisen.

Die erfindungsgemäßen, gefällten Kieselsäuren können einen PV-Wert 0,0042 MPa - 414 MPa, 140° gemessen mit der Hg-Porosimetrie von 1,00 - 3,00 ml / g, vorzugsweise 1,35 - 2,40 ml / g und besonders bevorzugt von 1,35 - 2,00 ml / g aufweisen.

Die erfindungsgemäßen, gefällten Kieselsäuren können einen Poren Maximum (Hg, -dV/dlogD,Kontaktwinkel 140 °, Oberflächenspannung 480 mN / m), von 35 nm - 100 nm, vorzugsweise 45 nm - 80 nm und besonders bevorzugt von 50 nm - 70 nm aufweisen.

Die erfindungsgemäßen, gefällten Kieselsäuren können in kompaktierter Form und besonders bevorzugt in Granulatform verwendet werden. Dabei können mindestens 50 % der Granulatkörner, resultierend aus der Ro-Tap > 300 μm Fraktion, eine längste Ausdehnung eines Granulatkorns (definiert als "Kornlänge") in der Höhe, Breite oder Länge minimal 1,0 mm, bevorzugt > 1,5 mm, besonders bevorzugt > 2,5 mm und insbesondere bevorzugt > 3,0 mm sein.

Ein weiterer Gegenstand der vorliegenden Erfindung ist ein Verfahren zur Herstellung der erfindungsgemäßen gefällten Kieselsäure, welches dadurch gekennzeichnet ist, dass man

a) eine wässrige Lösung eines organischen und/oder anorganischen Salzes und/oder eines Alkali- oder Erdalkalisilikats und/oder einer organischen und/oder anorganischen Base mit einem pH ≥ 9 vorlegt,

b) in diese Vorlage unter Rühren bei 80 - 98 °C für 60 - 120 Minuten, bevorzugt bei 85 - 98 °C für 80 - 110 Minuten, gleichzeitig Wasserglas und ein Säuerungsmittel zudosiert,

c) dann wird die Zugabe von Wasserglas gestoppt und nur Säure in geringerer Menge als zuvor zudosiert, um einen pH des Gemisches (bei 60 °C gemessen) von 8,3 - 10,0 zu erreichen,

d) dann wird das Gemisch für 45 min bis zu 200 min, bevorzugt bei 60 - 150 min, weiter bei hoher Temperatur ≥ 85 °C, bevorzugt bei > 90 °C gerührt, jedoch ohne weitere Edukte zuzugeben,

e) mit Schwefelsäure auf einen pH von ca. 3,5 - 4,5 (bei 60 °C gemessen) angesäuert und

f) filtriert, getrocknet, bevorzugt mittels Sprühtrocknungs- oder Spinflashtrocknungsaggregate, auf einen Trocknungsverlust < 8 % und im Anschluss granuliert wird.

Das erfindungsgemäße Verfahren kann während des gesamten Fällprozesses bei Temperaturen ≥ 80 °C und eine Alterung bei ≥ 85 °C durchführt werden. Dies hat zur Folge, dass man neben den spezifischen Oberflächen im Bereich von ≤ 115 m$^2$/g auch eine für diesen Oberflächenbereich sehr hohe innere Struktur erzeugt, die für die Inkorporation in eine Matrix, wie z.B. Kautschuk, sehr vorteilhaft ist. Dies zeigt sich in den hohen DOA Werten. Diese Strukturen bleiben auch nach der eigentlich Struktur zerstörenden Granulation zum größten Teil erhalten, da die erzeugte hohe Silanolgruppendichte zu einer stabilisierten Struktur der Kieselsäure führt.

Die Vorlage kann 20 % bis 90 %, vorzugsweise 30 % bis 90 %, besonders bevorzugt 40 % - 90 % des Endvolumens der Fällung betragen. Es ist möglich, eine Vorlage mit keinen oder nur wenig Elektrolyt (Salz) einzusetzen und die Elektrolyte kontinuierlich oder batchweise (bevorzugt am Anfang der Fällung) zuzugeben.

Optional kann eine zusätzliche Zugabe von organischen oder anorganischen Salzen auch während der Schritte a), b), c), e) oder f) erfolgen. Dies kann in Lösung oder als Feststoff, jeweils kontinuierlich oder als Batchzugabe durchgeführt werden. Es ist auch möglich, die Salze in einer oder mehreren Komponenten zu lösen und dann gleichzeitig mit diesen zuzugeben. Die Salze können folgende Anionen und Kationen enthalten:

$Li^+$, $Na^+$, $K^+$, $Rb^+$, $Be^{2+}$, $Mg^{2+}$, $Ca^{2+}$, $Sr^{2+}$, $Ba^{2+}$, $H^+$, $F^-$, $Cl^-$, $Br^-$, $I^-$, $SO_3^{2-}$, $SO_4^{2-}$, $HSO_4^-$, $PO_3^{3-}$, $PO_4^{3-}$, $NO_3^-$, $NO_2^-$, $CO_3^{2-}$, $HCO_3^-$, $OH^-$, $TiO_3^{2-}$, $ZrO_3^{2-}$, $ZrO_4^{4-}$, $AlO_2^-$, $Al_2O_4^{2-}$, $BO_4^{3-}$.

Als organische Salze sind die Salze der Ameisen-, Essig- und Propionsäure geeignet. Als Kation seien die genannten Alkali- oder Erdkaliionen genannt. Die Konzentration dieser Salze in der Vorlage kann 0,01 bis 5,00 mol/l betragen. Bevorzugt wird als anorganisches Salz $Na_2SO_4$ verwendet. Es ist möglich, das Säuerungsmittel in den Schritten b), c) und e) in gleicher oder unterschiedlicher Weise zuzuführen, d.h. mit gleichen oder unterschiedlichen Konzentrationen und/oder Zulaufgeschwindigkeiten. Analog kann auch das Wasserglas in den Schritten a) und b) in gleicher oder unterschiedlicher Weise der Reaktion zugeführt werden.

Neben Wasserglas (Natriumsilikat-Lösung) können auch andere Silikate wie Kalium- oder Calciumsilikat verwendet werden. Als Säuerungsmittel können neben Schwefelsäure auch andere Säuerungsmittel wie HCl, $HNO_3$, $H_3PO_4$ oder $CO_2$ eingesetzt werden. Die Filtration und Trocknung der Kieselsäuren sind dem Fachmann geläufig, wie beispielsweise in EP 1762544 B1 und den hierin zitierten Patenten. Bevorzugt wird die Kieselsäure in einem Stromtrockner, Sprühtrockner, Etagentrockner, Bandtrockner, Drehrohrtrockner, Flash-Trockner, Spin-Flash-Trockner oder Düsenturm getrocknet. Diese Trocknungsvarianten schließen den Betrieb mit einem Atomizer, einer Ein- oder Zweistoffdüse oder einem integrierten Fließbett ein. Bevorzugt weist die Fällungskieselsäure nach dem Trockungsschritt eine Partikelform mit einem mittleren Durchmesser von über 15 μm, insbesondere über 80 μm, besonders bevorzugt über 200 μm auf. Nach der Trocknung kann auch eine Granulation mit einem Walzenkompaktor mit nachgeschaltetem Brecher durchgeführt werden, mit dem die finale Kornlänge eingestellt wird.

Ein weiterer Gegenstand der Erfindung ist eine Kautschukmischung, enthaltend

(A) einen Kautschuk oder eine Mischung von Kautschuken und
(B) mindestens eine erfindungsgemäße gefällte Kieselsäure.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem

- Polybutadien (BR),

- Polyisopren (IR),

- Styrol/Butadien-Copolymerisate, beispielsweise Emulsions-SBR (E-SBR) oder Lösungs-SBR (L-SBR), vorzugsweise mit Styrolgehalten von 1 bis 60 Gew.-%, besonders vorzugsweise 5 bis 50 Gew.-% (SBR),

- Chloropren (CR)

- Isobutylen/Isopren-Copolymerisate (IIR),

- Butadien/Acrylnitril-Copolymere mit Acrylnitrilgehalten von 5 bis 60, vorzugsweise 10 bis 50 Gew.-% (NBR),

- teilhydrierter oder vollständig hydrierter NBR-Kautschuk (HNBR)

- Ethylen/Propylen/Dien-Copolymerisate (EPDM)

- oben genannte Kautschuke, die zusätzlich funktionelle Gruppen besitzen, wie z.B. Carboxy-, Silanol- oder Epoxygruppen, beispielsweise Epoxidierter NR, Carboxy-funktionalisierter NBR oder Silanol- (-SiOH) bzw. Siloxy-funktionalisierter (-Si-OR) SBR,

sowie Mischungen und Masterbatche dieser Kautschuke sein. Auch können die Latices der oben genannten Kautschuke insbesondere in Verbindung mit dem sogenannten "Liquid-phase Mixing" oder dem "Continuous Liquid-phase Mixing" Verwendung finden.

In einer bevorzugten Ausführungsform können die Kautschuke schwefelvulkanisierbar sein. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden. Besonders bevorzugt können L-SBR-Kautschuke, deren Butadienteile einen Vinylanteil von über 20 Gew.-% aufweisen, eingesetzt werden. Ganz besonders bevorzugt können L-SBR-Kautschuke, deren Butadienteile einen Vinylanteil von über 50 Gew.-% aufweisen, eingesetzt werden.

Bevorzugt können Mischungen der oben genannten Kautschuke, die einen L-SBR-Anteil von über 50 Gew.-%, besonders bevorzugt über 60 Gew.-%, aufweisen, eingesetzt werden.

Insbesondere können Polymerverschnitte nicht funktionalisierter und / oder funktionalisierter S-SBR/BR und S-SBR/BR/NR Typen in Laufflächencompounds eingesetzt werden. Oft auch unter Zusatz von Harzen. Diese Harze können natürlichen oder synthetischen Ursprungs sein und können chemisch modifiziert oder als Abmischungen von verschiedenen Harzen vorliegen.

Die erfindungsgemäße Kautschukmischung kann zusätzliche Füllstoffe enthalten. Als solche Füllstoffe können für die erfindungsgemäße Kautschukmischung die folgenden Füllstoffe eingesetzt werden:

- Ruße: Die Ruße können nach dem Flammruß-, Furnace-, Gasruß oder Thermal-Verfahren hergestellt werden und besitzen BET-Oberflächen von 20 m$^2$/g bis 200 m$^2$/g. Die Ruße können gegebenenfalls auch Heteroatome wie zum Beispiel Si enthalten.

- Amorphe Kieselsäuren, hergestellt zum Beispiel durch Fällung von Lösungen von Silikaten oder Flammenhydrolyse von Siliciumhalogeniden mit spezifischen Oberflächen von 5 bis 1000 m$^2$/g, vorzugsweise 20 bis 400 m$^2$/g (BET-Oberfläche) und mit Primärteilchengrößen von 10 bis 400 nm. Die Kieselsäuren können gegebenenfalls auch als Mischoxide mit anderen Metalloxiden, wie Al-, Ga-, B-, Mg-, Ca-, Ba-, Zn- und Titanoxiden vorliegen. Die Kieselsäuren können auch mit einem oder mehreren dieser Metallionen dotiert sein.

- Synthetische Silikate, wie Aluminiumsilikat, Erdalkalisilikate, wie Magnesiumsilikat oder Calciumsilikat, mit BET-Oberflächen von 20 bis 400 m$^2$/g und Primärteilchendurchmessern von 10 bis 400 nm.

- Synthetische oder natürliche Aluminium-oxide und -hydroxide.

- Natürliche Silikate, wie Kaolin und andere natürlich vorkommende Kieselsäuren.

- Naturfaser, speziell Cellulose, Mikro- und / oder Nano-Cellulose und Produkte hieraus.

- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 m$^2$/g, besonders bevorzugt 100 m$^2$/g bis 250 m$^2$/g, in Mengen von 5 bis 150 Gew.-Teilen, jeweils bezogen auf 100 Teile Kautschuk, eingesetzt werden.

Die genannten Füllstoffe können alleine oder im Gemisch eingesetzt werden.

Die Kautschukmischung kann 5 bis 150 Gew.-Teile erfindungsgemäße gefällten Kieselsäure und 0,1 bis 20 Gew.-Teile, bevorzugt 1 bis 18 Gew.-Teile, besonders bevorzugt 5 bis 15 Gew.-Teile, Organosilan, enthalten, wobei die Gew.-Teile auf 100 Gew.-Teile Kautschuk bezogen sind.

Die Kautschukmischung kann zusätzlich Silikonöl und/oder Alkylsilan enthalten.

Die erfindungsgemäße Kautschukmischung kann weitere bekannte Kautschukhilfsmittel, wie zum Beispiel Vernetzer, Vulkanisationsbeschleuniger, Reaktionsbeschleuniger, -verzögerer, Alterungsschutzmittel, Stabilisatoren, Verarbeitungshilfsmittel, Weichmacher, Wachse oder Metalloxide enthalten, sowie ggf. Aktivatoren, wie Triethanolamin, Polyethylenglykol oder Hexantriol.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein.

Als Vernetzer können Schwefel oder organische Schwefelspender eingesetzt werden.

Die erfindungsgemäße Kautschukmischung kann weitere Vulkanisationsbeschleuniger enthalten. Beispielsweise können als geeignete Vulkanisationsbeschleuniger Mercaptobenzthiazole, Sulfenamide, Guanidine, Dithiocarbamate, Thioharnstoffe, Thiocarbonate sowie deren Zinksalze, wie z.B. Zinkdibutyldithiocarbamat, eingesetzt werden.

Die erfindungsgemäße Kautschukmischung kann zusätzlich

ein Thiuramsulfid- und/oder Carbamatbeschleuniger und/oder die entsprechenden Zinksalze,

ein stickstoffhaltigen Co-Aktivator,

gegebenenfalls weitere Kautschukhilfsmittel und

gegebenenfalls weitere Beschleuniger

enthalten. Das Gewichtsverhältnis Beschleuniger zu stickstoffhaltigem Co-Aktivator kann gleich oder größer 1 sein.

Die erfindungsgemäße Kautschukmischung kann Tetrabenzylthiuramdisulfid oder Tetramethylthiuramdisulfid mit mindestens 0,25 Gewichtsteilen, bezogen auf 100 Gewichtsteile Kautschuk, Diphenylguanidin mit mindestens 0,25 Gewichtsteile, bezogen auf 100 Gewichtsteile Kautschuk, und Cyclohexyl- oder Dicyclohexylsulfenamid enthalten.

Bevorzugt können Sulfenamide zusammen mit Guanidinen und Thiuramen, besonders bevorzugt Cyclohexylsulfenamid oder Dicyclohexylsulfenamid zusammen mit Diphenylguanidin und Tetrabenzylthiuramdisulfid oder Tetramethylthiuramdisulfid, eingesetzt werden.

Die Vulkanisationsbeschleuniger und Schwefel können in Mengen von 0,1 bis 10 Gewichtsteile, bevorzugt 0,1 bis 5,0 Gewichtsteile, bezogen auf den eingesetzten Kautschuk, eingesetzt werden. Besonders bevorzugt können Schwefel und Sulfenamide in Mengen von 1,0 bis 4,0 Gewichtsteile, Thiurame in Mengen von 0,2 bis 1,0 Gewichtsteile und Guanidine in Mengen von 0,0 Gewichtsteile bis 3,0 Gewichtsteile eingesetzt werden.

Ein weiterer Gegenstand der Erfindung ist ein Verfahren zur Herstellung der erfindungsgemäßen Kautschukmischung, welches dadurch gekennzeichnet ist, dass man den Kautschuk oder die Mischung von Kautschuken, die erfindungsgemäße gefällte Kieselsäure und gegebenenfalls weitere Kautschukhilfsmittel in einem Mischaggregat mischt.

Die Abmischung der Kautschuke mit dem Füllstoff und gegebenenfalls Kautschukhilfsmitteln kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, die erfindungsgemäße, gefällte Kieselsäure und die Kautschukhilfsmittel bei 100 °C bis 170 °C eingemischt werden. Dabei können sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 °C bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischung kann bei Temperaturen von 80 °C bis 200 °C, bevorzugt 130 °C bis 180 °C, gegebenenfalls unter Druck von 10 bar bis 200 bar erfolgen.

Aus den erfindungsgemäßen Kautschukmischungen können durch Vulkanisation Formkörper hergestellt werden.

Die erfindungsgemäße Kautschukmischung kann zur Herstellung von Formkörpern, zum Beispiel für die Herstellung von Reifen, insbesondere Reifenlaufflächen, im Reifenunterbau oder in der Reifenseitenwand, Kabelmänteln, Schläuchen, Treibriemen, Förderbändern, Walzenbelägen, Schuhsohlen, Dichtungselementen, wie zum Beispiel Dichtungsringe, und Dämpfungselemente verwendet werden.

Die erfindungsgemäßen, gefällten Kieselsäuren haben den Vorteil, dass die entsprechenden Kautschukmischungen eine verbesserte Dispersion der Kieselsäure aufweisen. Außerdem besitzen die erfindungsgemäßen Kautschukmischungen eine verbesserte Verstärkung und ein besseres Weiterreißverhalten. Des Weiteren sollten die erzielten erhöhten dynamischen Steifigkeiten, bei 60 °C bestimmt, zu einer höheren Fahrstabilität, also einem verbessertem Handlingverhalten auf trockener Fahrbahn führen.

**Meßmethoden**

Bestimmung der Alkalizahl

Als Alkalizahl (AZ) versteht man den Verbrauch an Salzsäure in ml (bei 50 ml Probevolumen, 50 ml destilliertes Wasser und einer verwendeten Salzsäure der Konzentration 0,5 mol/l) bei einer direkten potentiometrischen Titration von alkalischen Lösungen, bzw. Suspensionen bis zu einem pH-Wert von 8,30. Man erfasst hiermit den freien Alkaligehalt der Lösung bzw. Suspension.

Das pH-Gerät (Fa. Knick, Typ: 766 pH-Meter Calimatic mit Temperaturfühler) und die pH-Elektrode (Einstabmesskette der Fa. Schott, Typ N7680) werden mit Hilfe zweier Pufferlösungen (pH = 7,00 und pH = 10,00) bei Raumtemperatur kalibriert. Die Einstabmesskette wird in die auf 40 °C temperierte Meßlösung bzw. -suspension bestehend aus 50,0 ml Fällsuspension und 50,0 ml entionisiertem Wasser getaucht. Anschließend gibt man tropfenweise Salzsäure-Lösung der Konzentration 0,5 mol/l hinzu, bis sich ein konstanter pH-Wert von 8,30 einstellt. Auf Grund des sich erst langsam einstellenden Gleichgewichts zwischen der Kieselsäure und dem freien Alkaligehalt bedarf es einer Wartezeit von 15 min bis zu einem endgültigen Ablesen des Säureverbrauchs. Bei den gewählten Stoffmengen und Konzentrationen entspricht der abgelesene Salzsäureverbrauch in ml direkt der Alkalizahl, welche dimensionslos angegeben wird.

pH - pH-Wert (warm) von Kieselsäuren in Anlehnung an DIN EN ISO 787-9
pH Messungen während der Herstellung der Silica erfolgt an "warmer" Silica = Messung bei 60 °C.

Die Durchführung erfolgt in Anlehnung an DIN EN ISO 787-9 mit nachfolgend beschriebenen Konkretisierungen: Es wird eine 5 %ige (m/m) wässrige Suspension der zu untersuchenden Probe hergestellt. Hierzu wird vollentsalztes (VE) Wasser verwendet.

Die Probensuspension wird vor der pH-Messung mindestens 5 Minuten auf einer Schüttelmaschine geschüttelt.

Die pH-Messung erfolgt an einem zuvor kalibrierten pH-Meter der Fa. Metrohm, Typ: 780 mit pH-Elektrode Typ 6.0228.000 (Fa. Metrohm).

CTAB Oberfläche - Bestimmung in Anlehnung an ISO 5794-1 G

Die Methode beruht auf der Adsorption von gepufferter CTAB (N-Cetyl-N,N,N-trimethylammoniumbromid) in wässriger Lösung an der "äußeren" Oberfläche von Kieselsäuren, die auch als "kautschukwirksame Oberfläche" bezeichnet wird. Nicht adsorbiertes CTAB wird mittels NDSS (Dioctylnatriumsulfosuccinat-Lösung) zurücktitriert. Der Endpunkt der Titration ist am maximalen Trübungsanstieg der Lösung gegeben.

Die Durchführung erfolgt in Anlehnung an ISO 5794-1 G mit nachfolgend beschriebenen Konkretisierungen, Ergänzungen und Abweichungen:
Im Zuge der Probenvorbereitung werden grobteilige Muster von Kieselsäuren und Silikaten vorzugsweise mittels geeigneter Mühle feinstvermahlen oder gemörsert und über ein 90 μm Sieb abgesiebt und nicht, wie in der Norm beschrieben, gemörsert und über ein 150 μm Sieb fraktioniert.

Die Suspensionen aus Prüfmuster und CTAB-Lösung mit einer erwarteten CTAB-Oberfläche kleiner 200 m²/g werden 10 Minuten lang gerührt. Die Suspensionen aus Prüfmuster und CTAB-Lösung mit einer erwarteten CTAB-Oberfläche größer gleich 200 m²/g werden, wie in der Norm beschrieben, 35 Minuten lang gerührt.

Nach der Adsorption wird die Kieselsäure über einen 0,2 μm Polyamid-Filter filtriert.

Die Titration des Filtrats erfolgt an einem Titroprozessor der Fa. Metrohm mit einem Autosampler und Tirando 809. Als Phototrode wird die Spectrosense 523 nm der Fa. Metrohm verwendet.

BET Oberfläche (N$_2$, Multi-Point) - Bestimmung in Anlehnung an DIN ISO 9277

Das Verfahren dient der Bestimmung der spezifischen N$_2$-Oberfläche von Kieselsäure nach dem BET-Verfahren in Anlehnung an DIN ISO 9277. Bei dieser Methode wird der Messwert durch Tieftemperatur-Adsorption von Stickstoff bei definierten Partialdrücken bestimmt. Die Analyse wird als Mehrpunktbestimmung durchgeführt und zeigt im Partialdruckbereich (p/po) von 0,05 - 0,20 bei Bestimmung von insgesamt 5 Messpunkten ein annähernd lineares Verhalten.

Die Durchführung erfolgt in Anlehnung an DIN ISO 9277 mit nachfolgend beschriebenen Konkretisierungen: Granulierte Proben werden vor dem Einwiegen vorsichtig mit einem Spatel zerdrückt und anschließend an dem Vakuum-Ausheizthermostat VacPrep™ 061 der Firma MICROMERITICS 60 Minuten bei (160 +/- 2) °C unter Vakuum ausgeheizt.

Zur Bestimmung der BET-Oberfläche werden während der Adsorptionsphase die folgenden 5 Relativ-Druckpunkte (p/po) aufgenommen: 0,0500; 0,0875; 0,1250; 0,1625 und 0,2000.

Für die Messungen wird die TriStar 3000er Serie (3000 / 3020 / 3030) der Firma MICROMERITICS mit statisch volumetrischem Messverfahren und Dewar-Gefäß verwendet.

Ro-Tap > 300 μm; Ro-Tap < 75 μm - Siebanalyse in Anlehnung an ISO 5794-1 Annex F

Die Siebanalyse erfolgt mit einer Rotations-Siebmaschine (Tyler-Analysensiebmaschine Ro-Tap RX-29 mit Zeitschaltuhr). Die Methode wird in Anlehnung an ISO 5794-1 Annex F durchgeführt. Für die Siebanalyse werden die Prüfsiebe mit verschiedenen Maschenweiten aufeinandergestapelt (Analysensieb mit Metallsiebgewebe, ISO 3310-1, Nennmaschenweite 75 μm, 200 mm Siebdurchmesser, Analysensieb mit Metallsiebgewebe, ISO 3310-1, Nennmaschenweite 150 μm, 200 mm Siebdurchmesser, Analysensieb mit Metallsiebgewebe, ISO 3310-1, Nennmaschenweite 300 μm, 200 mm Siebdurchmesser). Der Siebturm wird in der genannten Reihenfolge in der Analysensiebmaschine eingebracht. Die Bestimmung der Siebrückstände erfolgt in folgender Weise: Die Probe wird vor der Bestimmung schonend homogenisiert. Auf der Präzisionswaage werden 100 g mit einer Genauigkeit von 0,01 g in einen Becher eingewogen und die Probe quantitativ auf das oberste Sieb (300 μm) überführt. Die Ro-Tap-Siebung erfolgt für 5 min mit Klopfer. Nach Ende der Siebung wird der Siebturm entnommen und die Fraktion auf der Siebpfanne, dem 75 μm-, dem 150 μm- und dem 300 μm-Sieb ausgewogen.

Berechnung der Siebrückstände

Ro-Tap < 75 μm in % = AS · 100 % / E
sowie
Ro-Tap > 300 μm in % = A300 · 100 % / E
und
Ro-Tap > 150 μm in % = A150 · 100 % / E
mit

A300 = Rückstand auf dem 300 μm-Sieb in g
AS = Rückstand in der Siebpfanne in g
E = Einwaage in g

pH-Wert - Bestimmung an Kieselsäuren in Anlehnung an DIN EN ISO 787-9

Die Durchführung erfolgt in Anlehnung an DIN EN ISO 787-9 mit nachfolgend beschriebenen Konkretisierungen: Granuliertes Probenmaterial wird vor der Einwaage mittels Mörser pulverisiert.

Es wird eine 5 %ige (m/m) wässrige Suspension der zu untersuchenden Probe hergestellt. Hierzu wird vollentsalztes (VE) Wasser verwendet.

Die Probensuspension wird vor der pH-Messung mindestens 5 Minuten auf einer Schüttelmaschine geschüttelt.

Die pH-Messung erfolgt bei 23 °C +/- 2 °C an einem zuvor kalibrierten pH-Meter der Fa. Metrohm, Typ: 780 mit pH-Elektrode Typ 6.0228.000 (Fa. Metrohm).

Trocknungsverlust - Bestimmung in Anlehnung an DIN EN ISO 787-2

Es wird der Gewichtsverlust einer 2 h bei 105°C im Trockenschrank erhitzten Probe bestimmt.

Die Durchführung erfolgt in Anlehnung an DIN EN ISO 787-2 mit nachfolgend beschriebenen Konkretisierungen: Das Wägeglas (mit Schliffdeckel; Durchmesser ca.80 mm, Höhe ca. 30 mm) wird mit nicht aufgesetztem Deckel ca. 1 h bei 105 °C erhitzt. Nach dem Abkühlen im Exsikkator wird der Deckel eingesetzt. Auf einer Präzisionswaage wird das Gewicht auf 0,01 g genau bestimmt. 5 g bis 10 g der Probe (Einwaage abhängig von der Schüttdichte) werden exakt eingewogen und in einer gleichmäßigen Schicht auf dem Boden des Wägeglases ausgebreitet. Das Wägeglas vorsichtig öffnen und im Trockenschrank 2 h bei (105 + 2) °C erhitzen (Deckel wird miterhitzt, aber das Wägeglas noch nicht damit verschlossen).

Im Anschluss das Wägeglas vorsichtig mit dem Deckel schließen und im Exsikkator erkalten lassen und auf 0,01 g genau zurückwiegen.

Berechnung

$$Flüchtige\ Anteile\ /\% = \frac{(E - A) \cdot 100\%}{E}$$

E   = Einwaage in g

A   = Auswaage in g

Sears-Zahl $_{original}$ (SN) - Bestimmung an hydrophilen Kieselsäuren

Durch die Titration von Kieselsäure mit Kaliumhydroxid-Maßlösung 0,1 mol/L im Bereich von pH 4 bis pH 9 lässt sich die Sears-Zahl $_{original}$ als Maß für die Zahl an freien Silanolgruppen bestimmen.

Der Bestimmungsmethode liegen die folgenden chemischen Reaktionen zu Grunde, wobei =SiOH eine Silanolgruppe der Kieselsäure symbolisieren soll:

$$\equiv SiOH + NaCl \Rightarrow\ =SiONa + HCl$$

$$HCl + KOH \Rightarrow KCl + H_2O.$$

Durchführung:

Ca. 10,0 g einer pulverförmigen, kugelförmigen oder granulären Kieselsäure werden 60 Sekunden mit einer Fritschmühle (Pulverisette 14 mit 80 $\mu$m Sieb) bei 10 000 U/min gleichmäßig zerkleinert. Ca. 1,50 g der so behandelten Kieselsäure werden auf 0,1 mg genau in ein 250 ml Becherglas eingewogen und mit 150 ml NaCl-Lösung ($\beta$ (NaCl) = 200 g/L mit Salzsäure c(HCl)=1 mol/L auf pH 3 eingestellt) versetzt. Nach vollständiger Benetzung der Probe wird die Suspension mittels eines Ultra Turrax PT1300D (Fa. Polytron) 30 Sekunden lang bei einer Drehzahl von 20 000 U/min dispergiert.

Vor den Titrationen wird das pH-Meter (pH-Elektrode LL Unitrode der Fa. Methrom, Typ PT1000) unter Verwendung von Pufferlösungen (pH 4,00, pH 7,00 und pH 9,00) bei Raumtemperatur kalibriert. Mit dem pH-Meter wird zunächst der Ausgangs-pH-Wert der Suspension gemessen, danach wird je nach Ergebnis mit Kaliumhydroxid-Lösung (0,1 mol/l) bzw. Salzsäurelösung (0,1 mol/l) der pH-Wert auf 4,00 eingestellt. Anschließend wird mit 0,1 mol/l KOH-Maßlösung die Titration bis zum pH-Wert 9,00 durchgeführt. Der Verbrauch an KOH-Lösung in ml von pH 4,00 bis pH 9,00 entspricht $V_{pH4-9}$. In gleicher Weise wird eine Blindwert-Titration (ohne Zugabe von Kieselsäure) durchgeführt. Der Blindwert der Lösung beschreibt das Volumen Kalilauge $V_{BL}$, das benötigt wird um die NaCl-Lösung ohne Silica von pH 4 auf pH 9 zu titrieren.

Die Sears-Zahl $_{original}$ bezogen auf die Originalsubstanz mit der Einheit ml / (1,5 g) berechnet sich aus:

$$\text{Sears-Zahl }_{original} = (V_{pH4-9} - V_{BL}) * T * (1,5\ g) / E$$

Mit T = Titer der verwendeten KOH-Maßlösung

E = Einwaage der Probe in g

Silanolgruppendichte (SD) - Berechnung über die SN, bezogen auf die CTAB Oberfläche
Über die SN ist der Verbrauch von 0,1 n KOH in ml / (1,5 g) gegeben:

$$SN \cdot \frac{ml \dfrac{0,1mmol}{ml}}{1,5g} = SN \cdot 0,1 \frac{mmol}{1,5g}$$

Wendet man die CTAB Oberfläche und die Avogadro Konstante ($N_A$) an, so ergibt sich:

$$SN \cdot 0,1 \frac{mmol}{1,5g \cdot CTAB} \frac{g}{m^2} N_A$$

Daraus ergibt sich die Silanolgruppendichte (SD) in OH / $nm^2$:

$$SD = SN \cdot 0,1 \cdot \frac{mmol \cdot g}{1,5\,g \cdot CTAB \cdot m^2} \cdot N_A$$

$$SD = \frac{SN \cdot 40,1476057}{nm^2 \cdot CTAB}$$

wobei in den Formeln für SD die SN und die CTAB-Oberfläche dimensionslos eingesetzt werden, da diese in der Berechnung bereits berücksichtigt sind.

Glührückstand - Bestimmung in Anlehnung an ISO 3262-1 bzw. ASTM D 6740

Durch Glühen der gefällten Kieselsäure über 2 h bei 1000 °C in einem Glühofen wird der Gesamtwassergehalt (physikalisch und chemisch gebunden) und somit der Gehalt aller flüchtigen Anteile (Glühverlust) bestimmt, woraus sich auch der Glührückstand errechnen lässt.

Durchführung:

Jeweils ca. 500 mg Kieselsäure werden in zwei Porzellan- bzw. Schmelztiegel mithilfe eines Spatels auf einer Analysenwaage mit einer Genauigkeit von $\pm$ 0,1 mg eingewogen. Anschließend werden die Tiegel inklusive Kieselsäure (120 $\pm$ 5) min in einem Glühofen bei (1000 $\pm$ 50) °C geglüht.
Nach dem Glühen werden die Tiegel zum Abkühlen für ca. 1,5 - 2 h in einen Exsikkator mit geeignetem Trockenmittel gestellt und mit einer Analysenwaage zurückgewogen. Die Bestimmung wird als Doppelbestimmung durchgeführt.
Auswertung: Zunächst wird der Glühverlust bezogen auf die getrocknete Substanz berechnet:

$$GV[\%] = \frac{m_E \bullet \dfrac{100 - TV}{100} - m_A}{m_E \bullet \dfrac{100 - TV}{100}} \bullet 100$$

| GV$_{(getr.S.)}$: | Glühverlust bezogen auf die 2 h bei 105 °C getr. Substanz | in % |
| m$_E$: | Masse der eingewogenen Kieselsäure | in g |
| m$_A$: | Masse der geglühten Kieselsäure | in g |
| TV: | Trocknungsverlust 2 h bei 105 °C | in % |

Der Glührückstand bezogen auf die originale Substanz wird folgendermaßen berechnet:

$$GV(orig.) = GV_{(getr. S)} * (100 - TV) / 100 \text{ und daraus folgend}$$

$$GR(orig.) = 100\% - TV - GV(orig.)$$

Der Trocknungsverlust wird hierzu nach der Methode "Bestimmung des Trocknungsverlustes in Anlehnung an DIN EN ISO 787-2" (s.o.) bestimmt.

TAR - Granulatabrieb mittels Friabilitätstest

Für den Abrieb mittels Granulat-Friabilitätstest wird der Fein- und Grobanteil der Kieselsäure entfernt und die Fraktion 3,15 mm - 5,00 mm herangezogen. Die Granulatfraktion wird in einer sich drehenden Friabilitätskammer (z. B. ERWEKA TAR 220 mit Friabilitätstrommeln links und rechts) durch wiederholte mechanische Belastung 30 Minuten lang beansprucht. Anschließend wird der entstandene Feinanteil mittels 500 $\mu$m Sieb abgetrennt. Die Massendifferenz in % entspricht dem Granulatabrieb.

Die Bestimmung des Abriebs wird als Doppelbestimmung durchgeführt.

Es wird eine repräsentative 50 g Probe der zu analysierenden Kieselsäure genommen. Aussiebung der Kornfraktion 3,15 mm - 5,00 mm durch vorsichtige Handsiebung (Analysensiebe mit Metallsiebgewebe, ISO 3310-1, 200 mm Siebdurchmesser - Nennmaschenweite 500 $\mu$m, 3,15 mm, 5 mm und Siebpfanne). Damit werden Feinanteil und sehr grobe Partikel ausgeschlossen. (5,00 $\pm$ 0,1) g der Fraktion 3,15 mm - 5 mm exakt auf einer Analysen- oder Präzisionswaage abwiegen. Sollte die ausgesiebte Menge nicht ausreichen, ist die Messung nicht durchführbar.Es muss ein repräsentativer Teil der Probemenge entnommen werden. Die Probemenge wird in die Friabilitätstrommel gegeben, diese wird am Abriebtester angebracht. Das Gerät wird 30 Minuten bei 65 U / min betrieben. Anschließend wird das Material quantitativ auf ein 500 $\mu$m Sieb gegeben und durch moderates Schütteln / Bewegen der anhaftende Feinanteil entfernt. Die Granulatpartikel werden dann auf der Präzisions- oder Analysenwaage auf 0,01 g genau zurückgewogen.

Auswertung:

$$Abrieb\,(\%) = \frac{(E - A) * 100\%}{E}$$

Abrieb : Abrieb mittels Granulat-Friabilitätstest in %

E : Einwaage der ausgesiebten Fraktion 3,15 - 5 mm in g

A : Rückstand nach Belastung und Abtrennung des Feinanteils in g

Das Messergebnis ist der Mittelwert aus zwei Einzelmessungen und wird mit einer Nachkommastelle in % angegeben.

DOA-Aufnahme - Bestimmung in Anlehnung an ISO 19246

Zur Durchführung gibt man 12,50 $\pm$ 0,02 g der Probe in die Kneterkammer des Absorptometers "Absorptometer E mit erweiterter Funktionalität/ Auswerteeinheit" der Fa. Brabender. Dann wird unter ständigem Kneten mit einer Dosierrate von 4 mL / min Dioctyladipat (z.B. Plastomoll® DOA) zudosiert. Die Drehzahl des Kneters beträgt 125 U / min. Anhand der Rohdatenkurve wird durch das Programm ein Polynom berechnet. Der 70 %-Wert des maximalen Drehmomentes dieses Polynoms dient zur Ermittlung der DOA-Aufnahme bezogen auf Originalmaterial in mL / (100 g). Die Bestimmung erfolgt in Anlehnung an ISO 19246.

Bei Kieselsäure-Granulaten erfolgt die Bestimmung anhand der Kornfraktion 1,0 - 3,15 mm, die im Vorfeld durch Siebung mit den entsprechenden Sieben herzustellen ist.

In der Software des Messgerätes sind folgende Einstellungen vorzunehmen:

Messbedingung

| | |
|---|---|
| Dosierrate (Bürette): | 4,0 mL / min |
| Kneterdrehzahl: | 125 min-1 |
| Temperatur: | 23,0 °C |

Auswertung

| | |
|---|---|
| Drehmoment-Schwellwert: | 100 mNm |
| Ende: | 60 s nach Erreichung des maximalen Drehmoments |
| Drehmoment-Limit: | 10 000 mNm |

Polynom

Start: 50 % des maximalen Drehmomentes
Ende: 20 s nach Erreichung des Maximums
Unter Verwendung geeigneter Referenzmaterialien unterschiedlicher DOA-Aufnahme lässt sich mit Hilfe der Brabender® Software eine individuelle Normalisierung des Messkneters durchführen. Basierend auf der ermittelten Normalisierungsfunktion (Geradengleichung Y = a*x + b) wird die DOA-Aufnahme (normalisiert) bezogen auf Originalsubstanz in mL / (100 g) ausgedrückt als der 70 % Wert des Drehmomentmaximums dem Messprotokoll entnommen.

Elektrische Leitfähigkeit - Bestimmung in Anlehnung an DIN EN ISO 787-14

Die Bestimmung der elektrischen Leitfähigkeit von Kieselsäuren erfolgt in Anlehnung an DIN EN ISO 787-14. Gegenüber den Vorgaben dieser Norm wurden bei der Durchführung folgende Veränderungen vorgenommen: Es wird eine 4 %ige wässrige Suspension hergestellt (4,00 g Kieselsäure auf 100 ml entionisiertes Wasser) und vermessen.

Es wird direkt die Suspension gemessen, nicht das Filtrat.

Die Messung erfolgt bei 20,0 °C ± 0,5 °C und die Leitfähigkeit wird für die Bezugstemperatur 20 °C angegeben.

Bestimmung von Porenradien und Porenvolumina basierend auf Hg-Intrusion in Anlehnung an DIN 66133

In einem Druckbereich von 0.003 bis 420 MPa werden die Porenradien, das dazugehörige Porenvolumen und die Porenverteilung von Kieselsäure-Proben ermittelt. Die Bestimmung erfolgt mit dem AutoPore IV 9520 der Fa. Micromeritics in Anlehnung an DIN 66133.

Die Probe wird für 2 h bei 105 ± 2 °C in einem Trockenschrank getrocknet.

Für die Messung erfolgt die Einwaage der vorbereiteten Probe in das Penetrometer vom Typ 16 der Fa. Micromeretics. Es werden ca. 330 mg exakt auf 0,001 g genau eingewogen. Anschließend wird das Penetrometer im Low Pressure Port des Messgerätes langsam auf 50 $\mu$m Hg evakuiert und für 5 min bei diesem Druck belassen. Anschließend wird das Penetrometer zunächst im Low Pressure Port und danach im High Pressure Port mit Quecksilber bis zu einem Druck von 420 MPa befüllt und die Messkurve (Druck/Volumen-Kurve) aufgenommen. Die Bedienung des Autopore-Gerätes erfolgt entsprechend der Bedienungsanleitung von Micromeritics und ist Softwaregesteuert. Jede Messung wird um eine Leermessung des Penetrometers korrigiert. Der gesamte Messbereich beträgt 0,003 - 420 MPa.

Zur Berechnung der Messergebnisse aus der Messkurve werden herangezogen:

Poren Maximum:
Hg, -dV/dlogD; Kontaktwinkel 140 °, Oberflächenspannung 480 mN / m in nm

PV-Wert:

Hg, 0,0042 - 414 MPa; Kontaktwinkel 140 °, Oberflächenspannung 480 mN/m in ml / g

V (d5 - d50) / V (d5 - d100):

Wird gemäß WO2008077948 aus der Hg-Porosimetrie bestimmt.

Schüttdichte - Bestimmung in Anlehnung an ASTM D 1513

Ein 1000 ml Messzylinder (mit 20 ml Graduierung) wird mit aufgesetztem Pulvertrichter (Trichterinhalt mindestens 1 L) auf der Präzisionswaage (Genauigkeit 0,1 g) tariert. Die zu untersuchende Probe wird durch vorsichtiges Drehen des Probenbehältnisses gut vermischt. Bei Granulaten ist insbesondere darauf zu achten, dass nicht zusätzlicher Feinanteil erzeugt wird. Nach dem Vermischen werden mit einer Schaufel zwischen 500 mL und 700 mL Kieselsäure vorsichtig in ein 1 L Becherglas (mit Grobeinteilung) überführt. Die Kieselsäureprobe wird in einem Schub über den Trichter in den Messzylinder geschüttet. Nach dem Absitzen (ohne mechanische Verdichtung) wird das Schüttvolumen auf 5 mL genau abgelesen. Dabei ist darauf zu achten, dass das Füllvolumen zwischen 500 ML und 700 mL liegt. Gleichzeitig wird zur Berechnung der Schüttdichte das Gewicht der Probe auf ± 0,1 g genau ermittelt.

Berechnung der Schüttdichte:

$$D = \frac{1000 \cdot m}{V}$$

Hierin bedeuten:

D    Schüttdichte in g / L

V    Volumen der Probe nach dem Schütten in mL

m    Masse der Probe in g

Die Bestimmung wird als Doppelbestimmung durchgeführt. Wenn die beiden Ergebnisse um mehr als 3 % voneinander abweichen, wird ein dritter Wert zur Mittelwertbildung herangezogen. Das Ergebnis wird ohne Nachkommastelle angegeben.

**Beispiele**

Beispiel 1

In einem Reaktor mit Propellerrührsystem werden 1140 L Wasser und 150 kg Wasserglas vorgelegt und auf 88,8 °C aufgeheizt. Es werden innerhalb von 100 Minuten simultan 727,9 kg Wasserglas (Dichte 1,345 kg / L, 27 % $SiO_2$, 8 % $Na_2O$) und 77,6 kg Schwefelsäure (Dichte 1,84 kg / L, 96 % $H_2SO_4$) zugegeben, sodass die AZ im Reaktionsgemisch 24 - 27 beträgt.
Anschließend wird Schwefelsäure (Dichte 1,84 kg / L, 96 % $H_2SO_4$) zugegeben, sodass der pH im Reaktionsgemisch 8,6 (bei 60 °C gemessen) beträgt.
Die Temperatur im Fällbehälter wird innerhalb von 5 Minuten bis 94 °C erhöht und die Suspension wird 55 Minuten bei 94 °C unter Rühren gealtert.
Im Anschluß wird weiter Schwefelsäure (Dichte 1,84 kg / L, 96 % $H_2SO_4$) mit einer Dosierungsrate von 0,70 kg / min zugeführt, bis ein pH von 7 (bei 60 °C gemessen) erreicht ist. Dann wird mit einer Dosierungsrate von 0,35 kg / min bis zu einem pH von 4,0 (bei 60 °C gemessen) weiter Schwefelsäure zugesetzt.
Die erhaltene Suspension wird wie üblich filtriert und mit Wasser gewaschen und einer Spin-flashtrocknung unterzogen. Das so erhaltene Pulver wird granuliert, d.h. in einem Walzenkompaktor kompaktiert und im Anschluss über einen Brecher gebrochen.

Beispiel 2

In einem Reaktor mit Propellerrührsystem werden 1164 L Wasser und 150 kg Wasserglas vorgelegt (AZ 25 - 26) und auf 89,0 °C aufgeheizt. Es werden innerhalb von 100 Minuten simultan Wasserglas mit einer durchschnittlichen Dosierungsrate von 7,3 kg / min (Dichte 1,345 kg / L, 27 % $SiO_2$, 8 % $Na_2O$) und Schwefelsäure (Dichte 1,84 kg / L, 96 %ige $H_2SO_4$) mit einer durchschnittlichen Dosierungsrate von 0,82 kg / min) (Dichte 1,84 kg/L, 96 % $H_2SO_4$) zugegeben.
Anschließend wird weiter Schwefelsäure (Dichte 1,84 kg/L, 96% $H_2SO_4$) zugegeben, sodass der pH im Reaktionsmedium 8,5 (bei 60 °C gemessen) beträgt.
Die Temperatur im Fällbehälter wird innerhalb von 5 Minuten bis 94 °C erhöht und die Suspension wird 55 Minuten bei 94 °C unter Rühren gealtert.
Im Anschluß wird weiter Schwefelsäure (Dichte 1,84 kg / L, 96 %ige $H_2SO_4$) mit einer Dosierungsrate von 0,70 kg / min zunächst bis zu einem pH von 7 (bei 60 °C gemessen) zugegeben und dann mit einer Dosierungsrate von 0,35 kg / min bis zu einem pH von 4,0 (bei 60 °C gemessen) weiter angesäuert.
Die erhaltene Suspension wird wie üblich filtriert und mit Wasser gewaschen und einer Spin-flashtrocknung unterzogen. Das so erhaltene Pulver wird granuliert, d.h. in einem Walzenkompaktor kompaktiert und im Anschluss über einen Brecher gebrochen.
Die Kieselsäuren haben die in Tabelle 1 angegebenen analytischen Parameter.

Tabelle 1:

| Parameter | Einheit | Referenzkieselsäure I | Erfindungsgemäße Kieselsäure I Beispiel 1 | Erfindungsgemäße Kieselsäure II Beispiel 2 |
|---|---|---|---|---|
| BET Oberfläche ($N_2$, Multi-Point) | $m^2/g$ | 74 | 77 | 90 |
| CTAB Oberfläche | $m^2/g$ | 80 | 82 | 90 |
| DOA-Aufnahme | ml/(100 g) | 123 | 148 | 169 |
| Ro-Tap > 300 $\mu$m | % | 84,5 | 94,3 | 94,9 |
| Ro-Tap < 75 $\mu$m | % | 3,5 | 1,3 | 1,5 |
| Sears-Zahl original | ml/(1,5 g) | 10,6 | 11,7 | 12,4 |
| Silanolgruppendichte | OH/$nm^2$ | 5,3 | 5,7 | 5,5 |
| Trocknungsverlust | % | 6,1 | 5,7 | 5,4 |
| pH-Wert | | 7,7 | 6,5 | 7,1 |
| Elektrische Leitfähigkeit | $\mu$S/cm | 806 | 1180 | 176 |
| Glührückstand | % | 4,1 | 4,4 | 4,1 |
| Schüttdichte | g/l | 347 | 314 | 298 |
| TAR | % | nicht messbar | 22,4 | 21,0 |
| V(d5-d50) / V(d5-d100) | | 0,65 | 0,64 | 0,64 |
| PV-Wert | ml/g | 1,27 | 1,42 | 1,54 |
| Poren Maximum | nm | 61 | 61 | 57 |

Bei der Referenzkieselsäure 1 handelt es sich um ZEOSIL® 1085 GR der Firma Solvay S.A..

Beispiel 3

Gummitechnische Untersuchung

Die für die Gummimischungen verwendete Rezeptur (Green Tire Compound) ist in folgender Tabelle 2 angegeben. Dabei bedeutet die Einheit phr Gewichtsanteile bezogen auf 100 Teile des eingesetzten Rohkautschuks.

Tabelle 2: Rezeptur der "Green Tire" Mischung

| Name | Bestandteil | Herstellung / Vertrieb | Kautschukmischung 1 (Vergleich) mit Referenzkieselsäure I | erfindungsgemäße Kautschukmischung 2 mit erfindungsgemäßer Kieselsäure I | erfindungsgemäße Kautschukmischung 3 mit erfindungsgemäßer Kieselsäure II |
|---|---|---|---|---|---|
| 1. Stufe | | | phr | phr | phr |
| Buna VSL 4526-2 | S-SBR; s.a.[1] | ARLANXEO Deutschland GmbH | 96,25 | 96,25 | 96,25 |
| Buna CB 24 | Nd-BR; s.a.[2] | ARLANXEO Deutschland GmbH | 30,00 | 30,00 | 30,00 |
| Referenzkieselsäure I | | Solvay S.A. | 90,00 | | |
| Erfindungsgemäße Kieselsäure I | | Evonik Resource Efficiency GmbH | | 90,00 | |
| Erfindungsgemäße Kieselsäure II | | Evonik Resource Efficiency GmbH | | | 90,00 |
| Si 266 | bifunktionelles Silan | Evonik Resource Efficiency GmbH | 5,80 | 5,80 | 5,80 |
| N330 | Industrieruß | Orion Engineered Carbons GmbH | 5,00 | 5,00 | 5,00 |
| ZnO RS RAL 844 C | ZnO | Carl Arnsperger Chemikalien GmbH & Co. | 2,00 | 2,00 | 2,00 |
| Edenor ST1 GS | Stearic acid | Caldic Deutschland GmbH | 2,00 | 2,00 | 2,00 |
| Vivatec 500 | TDAE | H&R GmbH Co. KGaA | 8,75 | 8,75 | 8,75 |
| Vulkanox HS/LG | TMQ | LANXESS Deutschland GmbH | 1,50 | 1,50 | 1,50 |
| Vulkanox 4020/LG | 6PPD | LANXESS Deutschland GmbH | 2,00 | 2,00 | 2,00 |
| Protektor G 3108 | Wax | Paramelt B.V. Niederlande | 2,00 | 2,00 | 2,00 |
| | | | | | |
| 2. Stufe | | | | | |

(fortgesetzt)

| Name | Bestandteil | Herstellung / Vertrieb | Kautschukmischung 1 (Vergleich) mit Referenzkieselsäure I | erfindungsgemäße Kautschukmischung 2 mit erfindungsgemäßer Kieselsäure I | erfindungsgemäße Kautschukmischung 3 mit erfindungsgemäßer Kieselsäure II |
|---|---|---|---|---|---|
| Batch 1. Stufe | | | | | |
| Rhenogran DPG-80 | DPG 80 %ig | Rhein Chemie additives GmbH | 2,50 | 2,50 | 2,50 |
| | | | | | |
| 3. Stufe | | | | | |
| Batch 2. Stufe | | | | | |
| Richon TBZTD-OP | TBzTD | WEBER & SCHAER GmbH & Co. KG (produziert von Dalian Richon) | 0,20 | 0,20 | 0,20 |
| Vulkacit CZ/EG-C | CBS | LANXESS Deutschland GmbH | 1,60 | 1,60 | 1,60 |
| Schwefel | Schwefel vermahlen | HENSELER GmbH | 2,00 | 2,00 | 2,00 |

[1] Buna® VSL 4526-2 HM ist ein Lösungs-Styrol-Butadienkautschuk der mit 37,5 phr TDAE-Öl verstreckt wird; Mooney (1+4 @ 100 °C) : 62 ME; Vinyl: 44,5 %; Styrol : 26 %

Die Gummimischung wird dreistufig in einem Innenmischer entsprechend der folgenden tabellarischen Aufstellung (Tabelle 3) hergestellt:

Tabelle 3: Vorschrift zur Mischungsherstellung

| Mischer | HF MIXING GROUP (Harburg-Freudenberger Maschinenbau GmbH) |
|---|---|
|  |  |
| Stufe 1 | GK 1.5 N, Füllgrad 0,73; 70 UpM; Kammertemperatur: 70 °C; Friktion 1:1,11 |
| min:sec Mischzeit | Ziel Batchtemperatur: 145 °C - 155 °C |
| 00:00 - 00:15 | Bei 00:00: Zugabe Polymere; Vulkanox HS; Vulkanox 4020; Stempel schließen und 15 s mischen |
| 00:15 - 01:15 | Bei 00:15: Zugabe 45 phr Silica, Si 266; Stempel schließen und 60 s mischen |
| 01:15 | Stempel halb hochfahren, zur Lüftung und Säuberung des Stempels |
| 01:15 - 02:15 | Ölbeutel (LD-PE Polybeutel 150 x 200 mm, IGEFA Handelsgesellschaft) vor Beginn der Mischstufe öffnen und den Ruß in den Beutel gegeben; bei 01:15: |
|  | a) präparierten Beutel zugeben |
|  | b) 1/2 Silica |
|  | c) Protektor G 3108 |
|  | d) Stempel schließen und 60 s mischen |
| 02:15 - 03:45 | Bei 02:15: Zugabe ZnO und Stearinsäure; Stempel schließen und 90 s mischen; die angestrebte Batchtemperatur durch Drehzahlvariation bei 150 °C +/- 5 °C halten |
| 03:45 | Mischung ausfahren und Batchkontrolle durch Wiegen |
|  | Den ausgeworfenen Batch auf eine auf 60 °C temperierte Laborwalze geben und dort 45 s bei einem Walzenspalt von 4 mm und geeigneten Umdrehungszahlen ein Fell bilden lassen. Das Fell dabei nicht einschneiden, umlegen oder stürzen. Im Anschluss das Fell von der Walze abziehen und ggf. eine Probe entnehmen und auf das Gewicht für die zweite Mischstufe schneiden. Die Zwischenlagerung des Fells zur zweiten Mischstufe beträgt 24 +/- 3 h bei 23 +/-3 °C. Die Wartezeit zwischen der 1. & 2. Mischstufe ist so zu verstehen, dass alle Mischungen, die zu einer Mischserie gehören, nach Beginn des Mischens des ersten Compounds der Serie ohne weitere Unterbrechungen, direkt hintereinander weitergemischt werden. |
|  |  |
| Stufe 2 | GK 1.5 N, Füllgrad 0,70; 75 UpM; Kammertemperatur: 75 °C; Friktion 1:1,11 |
| min:sec Mischzeit | Ziel Batchtemperatur: 145 °C - 155 °C |
| 00:00 - 01:00 | Bei 00:00: Zugabe des Batches der 1.Stufe; Stempel schließen und 60 s mischen |
| 01:00 - 03:00 | Bei 01:00: Zugabe Rhenogran DPG-80; Stempel schließen und 120 s mischen; die angestrebte Batchtemperatur durch Drehzahlvariation bei 150 °C +/- 5 °C halten |
| 03:00 | Mischung ausfahren und Batchkontrolle durch Wiegen |
|  | Den ausgeworfenen Batch auf eine auf 60 °C temperierte Laborwalze geben und dort 45 s bei einem Walzenspalt von 4 mm und geeigneten Umdrehungszahlen ein Fell bilden lassen. Das Fell dabei nicht einschneiden, umlegen oder stürzen. Im Anschluss das Fell von der Walze abziehen und ggf. eine Probe entnehmen und auf das Gewicht für die dritte Mischstufe schneiden. Die Zwischenlagerung des Fells zur dritten Mischsstufe beträgt zwischen 4 h bis zu 24 h bei 23 +/-3 °C. Die Wartezeit zwischen der 2. & 3. Mischstufe ist so zu verstehen, dass alle Mischungen die zu einer Mischserie gehören, nach Beginn des Mischens des ersten Compounds der Serie ohne weitere Unterbrechungen, direkt hintereinander weitergemischt werden. |

(fortgesetzt)

|  |  |
|---|---|
| Stufe 3 | GK 1.5 N, Füllgrad 0,68; 50 UpM; Kammertemperatur: 50 °C; Friktion 1:1,11 |
| min:sec Mischzeit | Batchtemperatur: 90 °C - 110 °C |
| 00:00 - 02:00 | Bei 00:00: Zugabe des Batches der 2. Stufe und TBzTD, CBS, Schwefel; Stempel schließen und 120 s mischen |
| 02:00 | Mischung ausfahren und Batchkontrolle durch Wiegen |
|  | Den ausgeworfenen Batch auf eine auf 60 °C temperierte Laborwalze geben und dort 20 s bei einem Walzenspalt von 4 mm und geeigneten Umdrehungszahlen ein Fell bilden lassen. Das Fell dreimal rechts einschneiden und jeweils umlegen, dreimal links einschneiden und jeweils umlegen und dreimal eng stürzen. Zur Probennahme im Anschluss das Fell in der entsprechenden notwendigen Dicke ausfahren, Probe entnehmen, wieder zusammenlegen und wieder auf die rotierende Walze geben, bis alle notwendigen Proben entnommen wurden. |

Das allgemeine Verfahren zur Herstellung von Kautschukmischungen und deren Vulkanisate ist in dem folgendem Buch beschrieben: "Rubber Technology Handbook", W. Hofmann, Hanser Verlag 1994.

Die Vulkanisationszeit für die Prüfkörper beträgt bei 165 °C jeweils 15 min. Die gummitechnische Prüfung erfolgt gemäß den in Tabelle 4 angegebenen Prüfmethoden.

Tabelle 4: Vorschriften zur Durchführung physikalischer Tests

| Test / Verfahren | Rohmischung Vulkanisat | physikalische Größe | Einheit | Testbedingungen | Norm |
|---|---|---|---|---|---|
| MDR; 165 °C; 0,5°: Delta torque | R | Delta torque MDR | dNm | Test bei 165 °C; 0,5 ° | DIN 53529/3, ISO 6502 |
| Tensile test: Tensile strength | V | Zugfestigkeit beim Bruch | MPa | Test bei 23 °C; Norm-Ring R1; Abzugsgeschwindigkeit 500 mm / min | DIN 53504, ISO 37 |
| Tensile test: Modulus 200 % | V | Spannungswert bei 200 % Dehnung | MPa | Test bei 23 °C; Norm-Ring R1; Abzugsgeschwindigkeit 500 mm / min | DIN 53504, ISO 37 |
| Tensile test: Modulus 200 % / 50 % | V | Spannungswert bei 200 % Dehnung dividiert durch den Spannungswert bei 50 % Dehnung, entspricht dem Verstärkungsverhältnis | -- | Test bei 23 °C; Norm-Ring R1; Abzugsgeschwindigkeit 500 mm / min | DIN 53504, ISO 37 |
| Tensile test: Elongation at break | V | Bruchdehnung | % | Test bei 23 °C; Norm-Ring R1; Abzugsgeschwindigkeit 500 mm / min | DIN 53504, ISO 37 |
| DIN-abrasion | V | DIN-Abrieb: Volumenverlust | $mm^3$ | 10 N | DIN ISO 4649, ISO 2781, Method A |
| Tear resistance DIE C; 23 °C | V | Weiterreißwiderstand DIE C; 23 °C | N/mm | Test bei 23 °C; Normprüfkörper; Abzugsgeschwindigkeit 500 mm / min | DIN 53515 Prüfkörper ohne Einschnitt |
| Tear resistance GRAVES; 23 °C | V | Weiterreißwiderstand | N/mm | Test bei 23 °C; Normprüfkörper; Abzugsgeschwindigkeit 500 mm / min | DIN 53515 |

(fortgesetzt)

| Test / Verfahren | Rohmischung Vulkanisat | physikalische Größe | Einheit | Testbedingungen | Norm |
|---|---|---|---|---|---|
| Tear resistance GRAVES; 60 °C | V | Weiterreißwiderstand | N/mm | Test bei 60 °C; Normprüfkörper; Abzugsgeschwindigkeit 500 mm / min | DIN 53515 |
| Ball Rebound; 23 °C | V | Rückprallelastizität / % | % | Fallhöhe 500 mm, Stahlkugel mit d = 19 mm, 28 g | ASTM D 2632 |
| RPA strain sweep; 60 °C: $G^*$ | V | komplexer Schubmodul $G^*$ | MPa | RPA: 2. strain sweep am Vulkanisat 1,6 Hz; 60 °C; 0,28 % - 42 %Test bei 60°C, 1,6Hz, 0.28%-42.0% "Operators Manual RPA 2000" von Alpha Technologies, February 1997 | ASTM D 6601-02 |
| ZWICK force controlled; 60 °C: E* | V | Komplexer Modul E* | | 16 Hz, 50 N Vorkraft und 25 N Amplitudenkraft, 5 min Temperierzeit, Meßwertaufnahme nach 30 s Prüfzeit | DIN 53513, ISO 4664-1 |
| ZWICK force controlled; 0 °C: tan $\delta$ | V | Verlustfaktor tan $\delta$ | - | 16 Hz, 50 N Vorkraft und 25 N Amplitudenkraft, 5 min Temperierzeit, Meßwertaufnahme nach 30 s Prüfzeit | DIN 53513, ISO 4664-1 |
| Dispersion: DisperTester 3000 plus (100x) | V | Rating aufgrund nicht dispergierter Teilchen | % | Werkseinstellungen; Rating -je höher der Wert, desto besser die Dispersion | ISO 11345 : 2006; ASTM D 7723 |

(fortgesetzt)

| Test / Verfahren | Rohmischung Vulkanisat | physikalische Größe | Einheit | Testbedingungen | Norm |
|---|---|---|---|---|---|
| Dispersion: TOPO - Peak area | V | Rauheit aufgrund nichtdispergierter Teilchen | % | Rauheit aufgrund nicht dispergierter Teilchen => je niedriger der Wert, desto besser die Dispersion | In Anlehnung an ASTM D 2663; beschrieben in DE 199 17 975 C2 Bestimmung mittels einer topographischen Methode, beschrieben unter: "Entwicklung eines Verfahrens zur Charakterisierung der Füllstoffdispersion in Gummimischungen mittels einer Oberflächentopographie" A. Wehmeier; Diplomarbeit 1998 an der Fachhochschule Münster, Abteilung Steinfurt im Fachbereich Chemieingenieurwesen und "Filler dispersion Analysis by Topography Measurements" Degussa AG, Applied Technology Advanced Fillers, Technical Report TR 820. |
| Dispersion: TOPO - Considered sum of peaks | V | Anzahl von Fehlstellen aufgrund nicht dispergierter Teilchen | - | Anzahl der Fehlstellen durch mangelhafte Dispersion => je niedriger der Wert, desto besser die Dispersion | In Anlehnung an ASTM D 2663; beschrieben in DE 199 17 975 C2 Bestimmung mittels einer topographischen Methode, beschrieben unter: "Entwicklung eines Verfahrens zur Charakterisierung der Füllstoffdispersion in Gummimischungen mittels einer Oberflächentopographie" A. Wehmeier; Diplomarbeit 1998 an der Fachhochschule Münster, Abteilung Steinfurt im Fachbereich Chemieingenieurwesen und "Filler dispersion Analysis by Topography Measurements" Degussa AG, Applied Technology Advanced Fillers, Technical Report TR 820. |

Tabelle 5: Anwendungstechnische Daten der Beispiele

| | | Kautschukmischung 1 (Vergleich) | erfindungsgemäße Kautschukmischung 2 | erfindungsgemäße Kautschukmischung 3 |
|---|---|---|---|---|
| MDR: 165 °C; 0,5 °<br>Delta torque MDR | dNm | 12,7 | 15,0 | 14,3 |
| Tensile strength (4 rings R1 @ 23 °C) | MPa | 9,5 | 10,7 | 10,8 |
| Modulus 200 % | MPa | 5,7 | 6,8 | 6,5 |
| Modulus 200 % / 50 % | -- | 6,6 | 6,8 | 6,7 |
| Elongation at break | % | 300 | 300 | 310 |
| DIN-abrasion | mm$^3$ | 94 | 80 | 87 |
| Tear resistance DIE C, 23 °C | N/mm | 35 | 38 | 36 |
| Tear resistance GRAVES, 23 °C | N/mm | 13 | 21 | 16 |
| Tear resistance GRAVES, 60 °C | N/mm | 22 | 34 | 27 |
| Ball-Rebound, 23 °C | % | 45 | 41 | 43 |
| E*, 60 °C | MPa | 5,4 | 6,4 | 6,0 |
| tan δ, 0 °C Zwick | - | 0,393 | 0,432 | 0,422 |
| RPA: 2$^{nd}$ strain sweep vulcanizate 1,6 Hz; 60 °C; 0,28 % - 42 %<br>Modulus | MPa | 1,6 | 2,2 | 1,9 |
| Dispersion: DisperTester 3000 plus (100x) | % | 87,6 | 94,4 | 91,3 |
| Dispersion: Peak area (Topo) | % | 19,2 | 1,7 | 7,7 |
| Considered sum of peaks | -- | 334 | 32 | 140 |

Die in der Tabelle 5 dargestellten gummitechnischen Daten der erfindungsgemäßen Kautschukmischungen zeigen die überlegene Dispersion, bzw. Dispergierbarkeit der erfindungsgemäßen Kieselsäuren gegenüber dem Stand der Technik, Kautschukmischung 1 (Vergleich), auf. Die erfindungsgemäßen Kautschukmischungen 2 und 3 weisen bei der direkten Messung der Fehlstellen an einem Schnitt durch die Vulkanisate klar weniger nicht dispergierte Kieselsäure mittels der taktilen Topographiemessung und optisch mittels des Dispertesters auf. Damit einhergehend sind auch alle verstärkungsrelevanten Messungen deutlich verbessert: Im Zugversuch können bei gleichbleibender Bruchdehnung die Spannungswerte klar verbessert werden. Dazu im Einklang stehen auch die verbesserten Weiterreißergebnisse Die C und Graves bei verschiedenen Messbedingungen gemessen. Auch der DIN-Abrieb ist für die erfindungsgemäßen Kautschukmischungen gegenüber der Referenzmischung verbessert. Diese Vorteile zeigen an, dass ein Reifen mit einer Reifenlauffläche, beinhaltend und verstärkt durch die erfindungsgemäßen Kieselsäuren, ein deutlich verbessertes Verschleißverhalten aufweisen wird. Die Indikatoren Ball-Rebound, 23 °C und der tan δ bei 0 °C zeigen für das Nassrutschverhalten solcher Laufflächen zusätzlich auch klar verbesserte Werte. Die hohe Steifigkeit bei hohen Temperaturen (E*, 60 °C und Modulus (max) im RPA) zeigen bei diesen Messbedingungen zusätzlich noch ein verbessertes Handlingsverhalten auf trockener Straße gegenüber dem Stand der Technik an. Alles in allem sind diese Kautschukmischungen und die erfindungsgemäßen Kieselsäuren also in ganz besonderer Weise in der Lage, die Gesamtperformance von z.B. Winterreifen, oder den noch spezielleren Nordic Winter Tires im höchsten Maße zu optimieren und zu verbessern.

**Patentansprüche**

**1.** Gefällte Kieselsäuren, **gekennzeichnet durch** die folgenden physikalisch-chemischen Parameter

| CTAB-Oberfläche | $\leq$ 115 m$^2$/g, |
| --- | --- |
| DOA | $\geq$ 130 ml/(100 g), |
| RoTap > 300 $\mu$m | $\geq$ 86 %, |
| V (d5 - d50) / V (d5 - d100) | < 0,66. |

2. Gefällte Kieselsäuren gemäß Anspruch 1, **dadurch gekennzeichnet, dass** die CTAB-Oberfläche $\leq$ 90 m$^2$/g ist.

3. Gefällte Kieselsäuren gemäß Anspruch 1, **dadurch gekennzeichnet, dass** der PV-Wert 0,0042 MPa - 414 MPa, 140° im Bereich 1,00 - 3,00 ml / g liegt.

4. Gefällte Kieselsäuren gemäß Anspruch 1, **dadurch gekennzeichnet, dass** die Silanolgruppendichte $\geq$ 5,4 OH / nm$^2$ ist.

5. Gefällte Kieselsäuren gemäß Anspruch 1, **dadurch gekennzeichnet, dass** die Schüttdichte mindestens 180 g / L ist.

6. Gefällte Kieselsäuren gemäß Anspruch 1, **dadurch gekennzeichnet, dass** die Kornlänge $\geq$ 1 mm ist.

7. Verfahren zur Herstellung der gefällten Kieselsäuren gemäß Anspruch 1, **dadurch gekennzeichnet, dass** man

a) eine wässrige Lösung eines organischen und/oder anorganischen Salzes und/oder eines Alkali- oder Erdalkalisilikats und/oder einer organischen und/oder anorganischen Base mit einem pH $\geq$ 9 vorlegt,
b) in diese Vorlage unter Rühren bei 80 - 98 °C für 60 - 120 Minuten gleichzeitig Wasserglas und ein Säuerungsmittel zudosiert,
c) dann wird die Zugabe von Wasserglas gestoppt und nur Säure in geringerer Menge als zuvor zudosiert, um einen pH des Gemisches (bei 60 °C gemessen) von 9,0 - 10,0 zu erreichen,
d) dann wird das Gemisch für 45 min bis zu 200 min bei hoher Temperatur > 85 °C gerührt, jedoch ohne weitere Edukte zuzugeben,
e) mit Schwefelsäure auf einen pH von ca. 3,5 - 4,5 (bei 60 °C gemessen) angesäuert und
f) filtriert, getrocknet auf einen Trocknungsverlust < 8 % und im Anschluss granuliert wird.

8. Kautschukmischung, enthaltend

(A) einen Kautschuk oder eine Mischung von Kautschuken und
(B) mindestens eine gefällte Kieselsäure gemäß Anspruch 1.

9. Verfahren zur Herstellung der Kautschukmischung gemäß Anspruch 8, **dadurch gekennzeichnet, dass** man den Kautschuk oder die Mischung von Kautschuken, die gefällte Kieselsäure gemäß Anspruch 1 und gegebenenfalls weitere Kautschukhilfsmittel in einem Mischaggregat mischt.

10. Verwendung von Kautschukmischungen gemäß Anspruch 8 zur Herstellung von Reifen, Kabelmänteln, Schläuchen, Treibriemen, Förderbändern, Walzenbelägen, Schuhsohlen, Dichtungselementen und Dämpfungselementen.

**Europäisches Patentamt**
**European Patent Office**
**Office européen des brevets**

## EUROPÄISCHER RECHERCHENBERICHT

Nummer der Anmeldung

EP 20 20 4259

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 647 591 A1 (DEGUSSA [DE])<br>12. April 1995 (1995-04-12)<br>* Ansprüche 1-3 *<br>* das ganze Dokument *<br>----- | 1-10 | INV.<br>C01B33/193<br>C08K3/36<br>C08L21/00 |
| A | WO 2020/120393 A1 (RHODIA OPERATIONS [FR])<br>18. Juni 2020 (2020-06-18)<br>* Ansprüche 1,4,8,11 *<br>* das ganze Dokument *<br>----- | 1-10 | |
| A | US 2005/032965 A1 (VALERO REMI [FR])<br>10. Februar 2005 (2005-02-10)<br>* Absatz [0206]; Ansprüche 52,67 *<br>* das ganze Dokument *<br>----- | 1-10 | |
| A | EP 1 764 344 A2 (DEGUSSA [DE])<br>21. März 2007 (2007-03-21)<br>* Ansprüche 16,21 *<br>* das ganze Dokument *<br>----- | 1-10 | |

RECHERCHIERTE SACHGEBIETE (IPC)

C01B
C08K
C09J
C08L

Der vorliegende Recherchenbericht wurde für alle Patentansprüche erstellt

| Recherchenort | Abschlußdatum der Recherche | Prüfer |
|---|---|---|
| Den Haag | 12. März 2021 | Straub, Thomas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 20 20 4259

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2021

| Im Recherchenbericht angeführtes Patentdokument | Datum der Veröffentlichung | Mitglied(er) der Patentfamilie | Datum der Veröffentlichung |
|---|---|---|---|
| EP 0647591 A1 | 12-04-1995 | BR 9404019 A | 27-06-1995 |
| | | CN 1109445 A | 04-10-1995 |
| | | DE 4427137 A1 | 13-04-1995 |
| | | EP 0647591 A1 | 12-04-1995 |
| | | ES 2081223 T3 | 16-02-1996 |
| | | FI 944679 A | 08-04-1995 |
| | | JP 2556670 B2 | 20-11-1996 |
| | | JP H07172815 A | 11-07-1995 |
| | | KR 950011329 A | 15-05-1995 |
| | | RU 2076066 C1 | 27-03-1997 |
| | | TR 28814 A | 03-04-1997 |
| | | TW 288031 B | 11-10-1996 |
| WO 2020120393 A1 | 18-06-2020 | KEINE | |
| US 2005032965 A1 | 10-02-2005 | AU 2002341047 B2 | 09-11-2006 |
| | | BR 0211703 A | 28-09-2004 |
| | | CA 2457769 A1 | 27-02-2003 |
| | | CA 2729228 A1 | 27-02-2003 |
| | | CN 1541186 A | 27-10-2004 |
| | | CN 101412515 A | 22-04-2009 |
| | | DK 1419106 T3 | 30-01-2017 |
| | | EP 1419106 A1 | 19-05-2004 |
| | | EP 2325141 A1 | 25-05-2011 |
| | | EP 3078634 A1 | 12-10-2016 |
| | | ES 2610590 T3 | 28-04-2017 |
| | | JP 4515761 B2 | 04-08-2010 |
| | | JP 2005500238 A | 06-01-2005 |
| | | KR 20040030070 A | 08-04-2004 |
| | | MX PA04001133 A | 20-05-2004 |
| | | PT 1419106 T | 27-12-2016 |
| | | TW I247725 B | 21-01-2006 |
| | | US 2005032965 A1 | 10-02-2005 |
| | | US 2010221541 A1 | 02-09-2010 |
| | | US 2011263784 A1 | 27-10-2011 |
| | | WO 03016215 A1 | 27-02-2003 |
| EP 1764344 A2 | 21-03-2007 | BR PI0603907 A | 27-04-2007 |
| | | CN 1927712 A | 14-03-2007 |
| | | DE 102005043202 A1 | 15-03-2007 |
| | | EP 1764344 A2 | 21-03-2007 |
| | | ES 2391569 T3 | 27-11-2012 |
| | | JP 5388408 B2 | 15-01-2014 |
| | | JP 2007077011 A | 29-03-2007 |
| | | KR 20070029601 A | 14-03-2007 |
| | | PL 1764344 T3 | 31-12-2012 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT
ÜBER DIE EUROPÄISCHE PATENTANMELDUNG NR.**

EP 20 20 4259

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2021

| Im Recherchenbericht angeführtes Patentdokument | Datum der Veröffentlichung | Mitglied(er) der Patentfamilie | | Datum der Veröffentlichung |
|---|---|---|---|---|
| | | PT | 1764344 E | 17-10-2012 |
| | | TW | I376352 B | 11-11-2012 |
| | | US | 2007100057 A1 | 03-05-2007 |
| | | ZA | 200607523 B | 25-06-2008 |

Für nähere Einzelheiten zu diesem Anhang : siehe Amtsblatt des Europäischen Patentamts, Nr.12/82

EPO FORM P0461

Seite 2 von 2

**IN DER BESCHREIBUNG AUFGEFÜHRTE DOKUMENTE**

**In der Beschreibung aufgeführte Patentdokumente**

- WO 2012059234 A
- EP 2102104 A
- EP 1831297 A
- WO 2006072704 A
- US 2005032965 A
- WO 2008077948 A
- EP 1762544 B1
- DE 19917975 C2

**In der Beschreibung aufgeführte Nicht-Patentliteratur**

- **W. HOFMANN.** Rubber Technology Handbook. Hanser Verlag, 1994
- **A. WEHMEIER.** Entwicklung eines Verfahrens zur Charakterisierung der Füllstoffdispersion in Gummimischungen mittels einer Oberflächentopographie. *Diplomarbeit,* 1998
- **DEGUSSA AG.** Filler dispersion Analysis by Topography Measurements. *Applied Technology Advanced Fillers, Technical Report TR 820*